# EUROPÄISCHE PATENTSCHRIFT

(11) **EP 2 855 231 B1**
(45) Veröffentlichungstag und Bekanntmachung des Hinweises auf die Patenterteilung: **25.10.2017**
(21) Anmeldenummer: 13725918.0
(22) Anmeldetag: 28.05.2013
(51) Int. Cl.: B61H 7/08

(54) **MAGNETSCHIENENBREMSVORRICHTUNG**
MAGNETIC RAIL BRAKE DEVICE
DISPOSITIF DE FREIN ELECTROMAGNETIQUE SUR RAILS

(30) Priorität: 01.06.2012 DE 102012010898
(43) Veröffentlichungstag der Anmeldung: 08.04.2015
(73) Patentinhaber: Knorr-Bremse Gesellschaft mit beschränkter Haftung, 2340 Mödling (AT)
(72) Erfinder: LEHMANN, Henry, 2371 Hinterbrühl (AT); RATHAMMER, Richard, 2262 Stillfried-Grub (AT); BRADLEY, Stephen, 85435 Erding (DE); NEMETH, Csaba, 9400 Sopron (HU)
(74) Vertreter: von Bülow & Tamada
(86) Internationale Anmeldenummer: PCT/EP2013/001566
(87) Internationale Veröffentlichungsnummer: WO 2013/178350

(56) Entgegenhaltungen:
- FR-A- 1 592 792
- FR-A1- 2 495 559
- US-B1- 6 364 072

## Beschreibung

Die Erfindung bezieht sich auf eine Magnetschienenbremsvorrichtung gemäß dem Oberbegriff des Patentanspruches 1. Eine solche Vorrichtung ist aus der DE 101 11 685 A1 bekannt. Diese Magnetschienenbremsvorrichtung hat einen magnetischen Grundkörper mit zwei Schenkeln, an deren Enden Polschuhe mit Reibflächen angebracht sind. Generell handelt es sich bei Magnetschienenbremsvorrichtungen um Elektromagneten mit einer in Schienenlängsrichtung langgezogenen Spule und hufeisenähnlichen Magnetkernen. Der in die Magnetspule fließende Gleichstrom erzeugt im Magnetkern einen magnetischen Fluss, der sich über den Schienenkopf schließt. Die Bremskraft ist vom magnetischen Widerstand des Magnetkreises, d.h. der Geometrie und Permeabilität, der elektrischen Durchflutung, dem Reibwert zwischen Polschuh und Schiene sowie dem Schienenzustand abhängig.

Als Reibwerkstoffe für die Polschuhe wurde früher vorzugsweise St37-Stahl eingesetzt, während die DE 101 11 685 A1 als Reibwerkstoff einen Sinterwerkstoff vorschlägt.

Auch die EP 0 875 691 B1 schlägt vor, an den Polschuhen Reibwerkstoffblöcke anzubringen, die durch Sintern hergestellt sind, wobei anschließend der Trägerkörper angegossen wird oder die Befestigung mit Schraubverbindungen erfolgt.

Die DE-C 112359 zeigt eine Magnetschienenbremse, deren Polschuhe eine Mehrzahl von hintereinander in Längsrichtung des Polschuhs angeordnete Magnetschuhe gleicher Bauart aufweist, wobei einige der Magnetschuhe gelenkig gelagert sind, um sich beim Bremsen genau der Oberfläche des Schienenkopfes anpassen zu können.

Die US 6 364 072 B1 und FR 2 495 559 A1 offenbaren eine Magnetschienenbremsvorrichtung gemäß den Oberbegriffen der unabhängigen Ansprüche 1 und 2.

Problematisch ist das Reib- und Verschleißverhalten der Polschuhe. Wünschenswert ist es, dieses an unterschiedliche Einsatzbedingungen anpassen zu können.

Aufgabe der Erfindung ist es daher die Magnetschienenbremsvorrichtung der eingangs genannten Art dahingehend zu verbessern, dass sie hinsichtlich der Anzugskräfte, der Flächenpressungen zwischen den Reibpartnern und dem Verschleißverhalten an unterschiedliche Einsatzbedingungen angepasst werden kann.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung liegt darin, die Reibflächen der Polschuhe in einzelnen Bereichen aus unterschiedlichen Materialien auszubilden. In ersten Bereichen wird vorzugsweise das Material des Grundkörpers,
also insbesondere Stahl verwendet und in zweiten Bereichen ein davon verschiedenes Material, insbesondere Sintermaterial.

Als Sintermaterial kann beispielweise verwendet werden:
80 - 99 Gew% Eisen
0,5 - 5 Gew% Molubdänsulfit
0,5 - 5 Gew% Kohlenstoff
0,5 - 5 Gew% Siliciumcarbid.

Vorzugsweise haben die beiden Materialien unterschiedlich magnetische Eigenschaften. Damit ergeben sich auch unterschiedliche Anzugskräfte und Flächenpressungen zwischen den Polschuhen und dem Schienenkopf.

Vorzugsweise ist der Polschuh in Längsrichtung in die unterschiedlichen Bereiche unterteilt, wobei die unterschiedlichen Bereiche auch unterschiedliche Längen oder unterschiedliche Flächen haben können.

Zur Vermeidung von Symmetrien können die unterschiedlichen Bereiche in einem ersten Polschuh (z.B. dem linken Polschuh) anders verteilt angeordnet sein als in einem zweiten Polschuh (z.B. dem rechten Polschuh).

Nach einer Weiterbildung der Erfindung können auch mehr als zwei Materialien kombiniert werden, so dass insbesondere für die zweiten Bereiche unterschiedliche Materialien und insbesondere unterschiedliche Sintermaterialien verwendet werden.

Die Unterteilung kann in Schienenlängsrichtung jedoch auch in einem beliebigen Winkel dazu vorgenommen werden. Sie muss sich nicht über die gesamte Höhe des Polschuhs erstrecken sondern kann auch nur bis auf die Höhe eines Grundträgers reichen.

Die zweiten Bereiche können auch in Rondenform am Grundträger angebracht werden.

Der Grundträger besteht aus Reineisen oder einem anderen magnetisch gut leitendem Material.

Als Material für die zweiten Bereiche können auch nicht magnetische Werkstoffe zur Anwendung kommen. Dabei kann auch die Abfolge der unterschiedlichen Materialien variieren sowie auch das Verhältnis der Flächen der unterschiedlichen Materialien in Schienenlängsrichtung.

Die obigen Prinzipien können auch für Zwischenglieder und Endstücke von Gliedermagneten angewandt werden. Die Reibmaterialien der Polschuhe für Gliedermagneten können innerhalb der Polschuhreibflächen zwischen der linken und rechten Hälfte eines Zwischengliedes oder eines Endstückes variiert werden. Ebenso können die Reibmaterialien der Polschuhe für Gliedermagneten in Längsrichtung der Polschuhreibflächen eines Zwischengliedes oder Endstückes variiert werden. Alle vorgenannten Polschuhvarianten können auch bei Wirbelstrombremsen eingesetzt werden.

Im Folgenden wird die Erfindung anhand von Ausführungsbeispielen im Zusammenhang mit der Zeichnung ausführlicher erläutert. Es zeigt:
- Fig. 1: einen Querschnitt einer Magnetschienenbremsvorrichtung nach der Erfindung;
- Fig. 2: eine Seitenansicht eines Polschuhes nach einem ersten Ausführungsbeispieles der Erfindung;
- Fig. 3: eine Draufsicht auf die Reibfläche des Polschuhes der Fig.2
- Fig. 4: eine Draufsicht auf die Reibfläche eines Polschuhs nach einem zweiten Ausführungsbeispiel der Erfindung;
- Fig. 5: eine Draufsicht auf die Reibfläche eines Polschuhs nach einem dritten Ausführungsbeispiel der Erfindung.

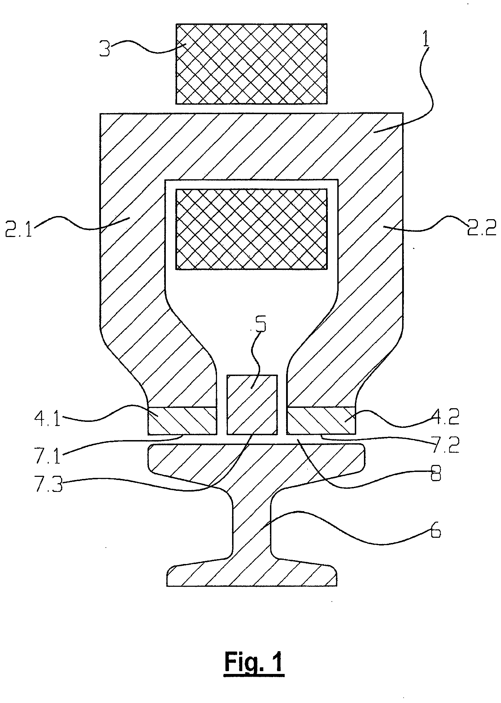

Fig. 1 zeigt eine Magnetschienenbremsvorrichtung mit einem hufeisenförmigen Grundkörper 1 aus magnetisch gut leitendem Material, wie z.B. Stahl, von dem zwei Schenkel 2.1 und 2.2 abstehen. An dem quer verlaufenden Joch des Grundkörpers 1 ist eine Magnetspule 3 angeordnet, die, wenn sie von Gleichstrom durchflossen ist, ein Magnetfeld in den beiden Schenkeln 2.1 und 2.2 erzeugt.

An den freien Enden der beiden Schenkel 2.1 und 2.2 sind Polschuhe 4.1 und 4.2 angebracht. Zwischen den beiden Polschuhen 4.1 und 4.2 ist eine Zwischenleiste 5 angebracht, die aus nicht magnetischem Material besteht. Die Polschuhe 4.1 und 4.2 liegen im Fahrbetrieb einer Schiene 6 gegenüber und sind durch einen Luftspalt 8 von dieser getrennt. Die Polschuhe 4.1 und 4.2 sowie die Zwischenleiste 5 haben Reibflächen 7.1, 7.2 und 7.3, die im Bremsbetrieb auf die Oberfläche der Schiene 6 abgesenkt werden und durch Magnetkräfte gegen die Schiene 6 gedrückt werden. Dies erfolgt dadurch, dass die Spule 3 mit Gleichstrom beaufschlagt wird. Der Magnetkreis wird damit über die Schenkel 2.1, 2.2, die Polschuhe 4.1, 4.2 und die Schiene 6 geschlossen, wobei bei einer Reibungsbremse der Grundkörper 1 verschieblich am Fahrzeug befestigt ist und dadurch den Luftspalt 8 schließen kann, damit die Reibflächen 7.1, 7.2 und 7.3 die Oberfläche der Schiene 6 berühren.

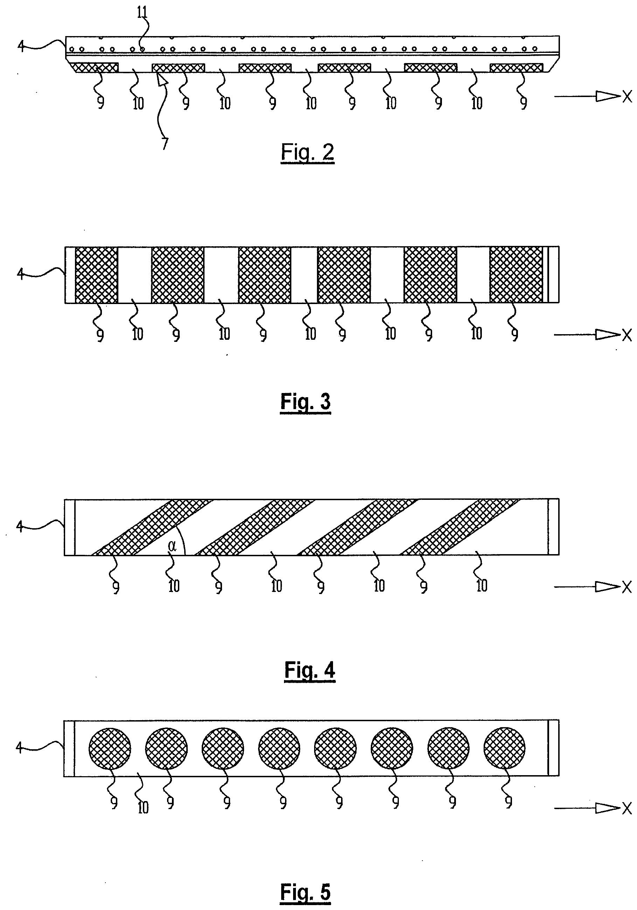

Fig. 2 zeigt eine Seitenansicht eines Polschuhes 4, der einen Grundträger aus einem ersten Material 10 aufweist. Dieser Grundträger kann auch einstückig mit einem der Schenkel 2.1 bzw. 2.2 verbunden sein. Der Grundträger 4 hat in Längsrichtung (x) des Polschuhes mehrere Einsätze aus einem zweiten Material 9, das insbesondere Sintermaterial ist. Die Reibflächen des Sintermaterials 9 und die Reibflächen des Grundkörpers 10 liegen dabei in einer Ebene, so dass in Längsrichtung (x) abwechselnd erstes (10) und zweites (9) Material aufeinanderfolgt. Die Verankerung des zweiten Materiales 9 in dem Grundträger 4 kann in an sich bekannter Weise erfolgen, wie beispielsweise in der EP 0 875 691 B1 beschrieben ist, beispielsweise durch Angießen des Grundträgers an die zweiten Materialien 9, die schwalbenschwanzförmige Köpfe haben.

In Fig. 2 hat der Grundträger 4 eine Vielzahl von Löchern 11, über die er an den Schenkeln 2.1 und 2.2 angeschraubt werden kann.

Fig. 3 zeigt eine Draufsicht auf die Reibfläche 7 eines Polschuhes. Hier ist die Aufeinanderfolge der unterschiedlichen Materialien 9, 10 deutlich zu erkennen, wobei darauf hingewiesen wird, dass die Länge der unterschiedlichen Materialien 9, 10 in x-Richtung variieren kann. Auch sei darauf hingewiesen, dass die Abfolge der unterschiedlichen Materialien 9, 10 an den beiden Polschuhen 4.1 und 4.2 zur Vermeidung von Symmetrien unterschiedlich sein kann.

Fig. 4 verdeutlicht, dass die Einsätze aus dem zweiten Material 9 auch unter einem Winkel α gegenüber der Längsrichtung x geneigt sein können und somit schräg verlaufende Streifen bilden. Die Breite dieser Streifen kann ebenfalls variieren.

Fig. 5 zeigt eine Draufsicht auf die Reibfläche eines Polschuhs nach einem dritten Ausführungsbeispiel der Erfindung, bei dem die Einsätze aus zweitem Material 9 rondenförmig sind.

Die bisher beschriebenen Bauformen der Polschuhe können in gleicher Weise für Zwischenglieder und Endstücke von Gliedermagneten angewandt werden, wobei die Reibmaterialien der Polschuhe für Gliedermagneten innerhalb der Polschuhreibflächen zwischen der linken und rechten Hälfte eines Zwischengliedes oder Endstückes variiert werden können. Auch können die Reibmaterialien der Polschuhe für Gliedermagneten in Längsrichtung der Polschuhreibflächen eines Zwischengliedes oder Endstückes variiert werden.

Schließlich können die beschriebenen Polschuhvarianten auch bei Wirbelstrombremsen eingesetzt werden.

## Patentansprüche

1. Magnetschienenbremsvorrichtung mit einem magnetischen Grundkörper (1), der Polschuhe (4.1, 4.2) mit Reibflächen (7.1, 7.2) aufweist, wobei die Reibflächen (7.1, 7.2) der Polschuhe (4.1, 4.2) in ersten Bereichen (10) aus anderem Material sind als die Reibflächen in zweiten Bereichen (9), **dadurch gekennzeichnet, dass** die Materialien der ersten und zweiten Bereiche (10, 9) an einem ersten Polschuh (4.1) anders verteilt angeordnet sind als an einem zweiten Polschuh (4.2) der Magnetschienenbremsvorrichtung.

2. Magnetschienenbremsvorrichtung mit einem magnetischen Grundkörper (1), der Polschuhe (4.1, 4.2) mit Reibflächen (7.1, 7.2) aufweist, wobei die Reibflächen (7.1, 7.2) der Polschuhe (4.1, 4.2) in ersten Bereichen (10) aus anderem Material sind als die Reibflächen in zweiten Bereichen (9), **dadurch gekennzeichnet, dass** die Reibflächen der zweiten Bereiche (9) aus unterschiedlichem Material sind.

3. Magnetschienenbremsvorrichtung nach Anspruch 1 oder 2, **dadurch gekennzeichnet, dass** die Reibflächen (7.1, 7.2) der Polschuhe (4.1, 4.2) in den ersten Bereichen (10) aus dem Material des Grundkörpers (1) sind.

4. Magnetschienenbremsvorrichtung nach Anspruch 1 oder 2, **dadurch gekennzeichnet, dass** das Material der ersten Bereiche (10) sich vom Material des Grundkörpers (1) unterscheidet.

5. Magnetschienenbremsvorrichtung nach einem der Ansprüche 1 bis 4, **dadurch gekennzeichnet, dass** das Material der ersten Bereiche (10) Stahl ist und dass das Material der zweiten Bereiche (9) ein Sintermaterial ist.

6. Magnetschienenbremsvorrichtung nach Anspruch 1 bis 5, **dadurch gekennzeichnet, dass** die Materialien der ersten und zweiten Bereiche (10, 9) unterschiedliche magnetische Eigenschaften haben.

7. Magnetschienenbremsvorrichtung nach einem der Ansprüche 1 bis 6, **dadurch gekennzeichnet, dass** die Materialien der ersten und zweiten Bereiche (10, 9) in Längsrichtung (x) der Polschuhe (4.1, 4.2) hintereinander verteilt angeordnet sind.

8. Magnetschienenbremsvorrichtung nach einem der Ansprüche 1 bis 7, **dadurch gekennzeichnet, dass** die Materialien der ersten und zweiten Bereiche (10, 9) in Längsrichtung (x) der Polschuhe (4.1, 4.2) unterschiedliche Länge haben.

9. Magnetschienenbremsvorrichtung nach einem der Ansprüche 1 bis 8, **dadurch gekennzeichnet, dass** die Materialien der ersten und zweiten Bereiche (10, 9) streifenförmig ausgebildet sind und dass die Streifen unter einem spitzen Winkel (α) gegenüber der Längsrichtung (x) der Polschuhe (4.1, 4.2) geneigt angeordnet sind.

10. Magnetschienenbremsvorrichtung nach einem der Ansprüche 1 bis 9, **dadurch gekennzeichnet, dass** das Material des zweiten Bereiches (9) rondenförmig ist.

11. Magnetschienenbremsvorrichtung nach einem der Ansprüche 1 bis 10, **dadurch gekennzeichnet, dass** das Verhältnis der Reibflächen (7.1, 7.2) der unterschiedlichen Materialien (9, 10) in Schienenlängsrichtung (x) variiert.

## Claims

1. Magnet rail brake device with a magnetic main body (1) including pole shoes (4.1, 4.2) with friction surfaces (7.1, 7.2), wherein the friction surfaces (7.1, 7.2) of the pole shoes (4.1, 4.2) in first sections (10) are made of a different material as the friction surfaces in second sections (9), **characterized in that** the materials of the first and second sections (10, 9) at a first pole shoe (4.1) are arranged differently compared to a second pole shoe (4.2) of the magnet rail brake device.

2. Magnet rail brake device with a magnetic main body (1) including pole shoes (4.1, 4.2) with friction surfaces (7.1, 7.2), wherein the friction surfaces (7.1, 7.2) of the pole shoes (4.1, 4.2) in first sections (10) are made of a different material as the friction surfaces in second sections (9), **characterized in that** the friction surfaces of the second sections (9) are made of different material.

3. Magnet rail brake device according to claim 1 or 2, **characterized in that** the friction surface (7.1, 7.2) of the pole shoes (4.1, 4.2) in the first areas (10) are made of the material of the main body (1).

4. Magnet rail brake device according to claim 1 or 2, **characterized in that** the material of the first sections (10) differs from the material of the main body (1).

5. Magnet rail brake device according to one of the claims 1 to 4, **characterized in that** the material of the first sections (10) is steel and the material of the second sections (9) is a sinter material.

6. Magnet rail brake device according to one of the claims 1 to 5, **characterized in that** the materials of the first and second sections (10, 9) have different magnetic properties.

7. Magnet rail brake device according to one of the claims 1 to 6, **characterized in that** the materials of the first and second sections (10, 9) are arranged successively distributed in longitudinal direction (x) of the pole shoes (4.1, 4.2).

8. Magnet rail brake device according to one of the claims 1 to 7, **characterized in that** the materials of the first and second areas (10, 9) have different lengths in longitudinal direction (x) of the pole shoes (4.1, 4.2).

9. Magnet rail brake device according to one of the claims 1 to 8, **characterized in that** the materials of the first and second sections (10, 9) are formed stripe shaped and that the stripes are arranged inclined under an acute angle (α) seen from the length direction (x) of the pole shoes (4.1, 4.2).

10. Magnet rail brake device according to one of the claims 1 to 9, **characterized in that** the material of the second section (9) is round blank shaped.

11. Magnet rail brake device according to one of the claims 1 to 10, **characterized in that** the relation of the friction surfaces (7.1, 7.2) of the different materials (9, 10) varies in length direction (x) of the rails.

## Revendications

1. Dispositif de frein électromagnétique sur rail, comprenant un corps de base (1) qui comporte des patins polaires (4.1, 4.2) ayant des surfaces de friction (7.1, 7.2), dans lequel les surfaces de friction (7.1, 7.2) des patins polaires (4.1, 4.2) dans des premières régions (10) sont composées d'un matériau différent par rapport aux surfaces de friction dans des secondes régions (9), **caractérisé en ce que** les matériaux des premières et secondes régions (10, 9) sur un premier patin polaire (4.1) sont distribués différemment par rapport à un second patin polaire (4.2) du dispositif de frein électromagnétique sur rail.

2. Dispositif de frein électromagnétique sur rail, comprenant un corps de base (1) qui comporte des patins polaires (4.1, 4.2) ayant des surfaces de friction (7.1, 7.2), dans lequel les surfaces de friction (7.1, 7.2) des patins polaires (4.1, 4.2) dans des premières régions (10) sont composées d'un matériau différent par rapport aux surfaces de friction dans des secondes régions (9), **caractérisé en ce que** les surfaces de friction des secondes régions (9) sont faites d'un matériau différent.

3. Dispositif de frein électromagnétique sur rail selon l'une des revendications 1 ou 2, **caractérisé en ce que** les surfaces de friction (7.1, 7.2) des patins polaires (4.1, 4.2) dans les premières régions (10) sont faites dans le matériau du corps de base (1).

4. Dispositif de frein électromagnétique sur rail selon l'une des revendications 1 ou 2, **caractérisé en ce que** le matériau des premières régions (10) est différent du matériau du corps de base (1).

5. Dispositif de frein électromagnétique sur rail selon l'une quelconque des revendications 1 à 4, **caractérisé en ce que** le matériau des premières régions (10) est l'acier et **en ce que** le matériau des secondes régions (9) est un matériau fritté.

6. Dispositif de frein électromagnétique sur rail selon l'une quelconque des revendications 1 à 5, **caractérisé en ce que** les matériaux des premières et secondes régions (10, 9) présentent des propriétés magnétiques différentes.

7. Dispositif de frein électromagnétique sur rail selon l'une quelconque des revendications 1 à 6, **caractérisé en ce que** les matériaux des premières et secondes régions (10, 9) sont disposés l'un à la suite de l'autre selon la direction longitudinale (x) des patins polaires (4.1, 4.2).

8. Dispositif de frein électromagnétique sur rail selon l'une quelconque des revendications 1 à 7, **caractérisé en ce que** les matériaux des premières et secondes régions (10, 9) ont des longueurs différentes selon la direction longitudinale (x) des patins polaires (4.1, 4.2).

9. Dispositif de frein électromagnétique sur rail selon l'une quelconque des revendications 1 à 8, **caractérisé en ce que** les matériaux des premières et secondes régions (10, 9) sont structurés en forme de bandes et **en ce que** les bandes sont disposées inclinées selon un angle aigu (a) par rapport à la direction longitudinale (x) des patins polaires (4.1, 4.2).

10. Dispositif de frein électromagnétique sur rail selon l'une quelconque des revendications 1 à 9, **caractérisé en ce que** le matériau de la seconde région (9) présente une forme ronde.

11. Dispositif de frein électromagnétique sur rail selon l'une quelconque des revendications 1 à 10, **caractérisé en ce que** la proportion des surfaces de friction (7.1, 7.2) qui est en un matériau différent (9, 10) varie le long de la direction longitudinale (x) du rail.
